# DEMANDE DE BREVET EUROPEEN

(11) **EP 0 644 100 A1**
(43) Date de publication de la demande: **22.03.1995**
(21) Numéro de dépôt: 94402076.7
(22) Date de dépôt: 19.09.1994
(51) Int. Cl.: B62B 7/12, A47D 13/04

(54) **Poussette de bébé transformable en trotteur**

(30) Priorité: 22.09.1993 FR 9311272
(71) Demandeur: Lageois, Gérard, F-75020 Paris (FR)
(72) Inventeur: Lageois, Gérard, F-75020 Paris (FR)
(74) Mandataire: Dejoux, André

(57) **Abrégé**

La poussette transformable en trotteur pour bébé comporte:
- un siège (1) dans lequel on a réalisé une ouverture (2) fermée par une partie de siège (3) escamotable, pour passer le bébé au travers de ladite ouverture et le mettre en position trotteur,
- un support (5) immobilisé sous la partie fixe du siège, sur lequel le bébé peut s'asseoir, ses pieds étant en appui sur le sol, ou se lever pour marcher en se tenant au siège ou à une barre existant sur certaines poussettes.

## Description

L'invention concerne une poussette de bébé classique ou non, transformable en trotteur.

On connaît déjà des trotteurs conçus pour permettre aux bébés de s'exercer à marcher seuls, à leur rythme. Ils comportent généralement une structure tubulaire à quatre roulettes, dans laquelle est fixé un tissu support généralement perçé de deux trous pour le passage des jambes du bébé. Ils sont utilisés uniquement dans les appartements ou dans les maisons du fait de leur conception.

Hors des maisons et appartements, les bébés sont transportés sur des poussettes et ils n'ont plus la possibilité de s'exercer seuls à la marche, à moins qu'on ne les soutiennent manuellement.

La poussette pour bébé, transformable en trotteur selon l'invention, a pour objet de permettre aux bébés de poursuivre leur entraînement à la marche en n'importe quel lieu hors de la maison, sur les trottoirs lors d'une promenade, dans les squares etc.

Selon une première réalisation de l'invention, la poussette transformable en trotteur pour bébé comporte:
- un siège dans lequel on a réalisé une ouverture fermée par une partie de siège escamotable, pour passer le bébé au travers et le mettre en position trotteur,
- un support immobilisé sous la partie fixe du siège, sur lequel le bébé peut ou s'asseoir, ses pieds étant en appui sur le sol, ou se lever pour marcher en se tenant au siège ou à une barre existant sur certaines poussettes. Le support du bébé est réalisé en matière souple et résistante, et est rendue solidaire du dessous de la partie fixe du siège ou de la structure et comporte un moyen de réglage en hauteur selon la taille du bébé; ledit support est muni de trous de passage des jambes du bébé, ou bien, dans une autre version, il est constitué d'une bande de matériau souple sur laquelle on place le bébé à cheval.

Selon une seconde réalisation de l'invention, la poussette transformable en trotteur pour bébé, la totalité du siège est entièrement escamotable par pivotement sur une articulation dont les paliers sont rendus solidaires de la structure de ladite poussette; la partie avant dudit siège comporte deux moyens d'appui latéral sur deux moyens complémentaires solidaires de la structure et munis chacun d'un moyen de verrouillage du siège en position de promenade et déverrouillés en position trotteur.

**Les avantages** de la poussette transformable en trotteur selon l'invention sont les suivants:
- elle permet de profiter de toutes les occasions pour permettre au bébé transporté, de s'exercer à la marche à l'extérieur de la maison;
- double fonction de poussette et de trotteur, pour le déplacement et pour l'entraînement à la marche.

L'invention est décrite en détail dans le texte qui suit, en référence aux dessins annexés donnés à titre de schémas non limitatifs, dans lesquels on a montré, selon l'invention, en perspective et schématiquement:
- **fig.1,** une poussette de type courant comportant la partie du siège escamotable, présenté en position d'utilisation en poussette normale;
- **fig.2,** une poussette de type courant comportant une partie du siège escamotable, en position relevée et un bébé engagé dans l'ouverture et assis sur un support permettant l'utilisation en trotteur;
- **fig.3,** un exemple de partie de siège escamotable représenté en vue de dessus en position de promenade;
- **fig.4,** la fixation réglable d'un exemple, vu en élévation, de support de bébé en position trotteur;
- **fig.5,** la fixation réglable d'un exemple, vu de dessus, selon la fig. 4, du support de bébé en position trotteur;
- **fig.6,** la position relevée du siège escamotable de la fig.3 avec un autre type de support pour trotteur;
- **fig.7,** un autre exemple de support passant entre les jambes du bébé en position trotteur;
- **fig.8,** un autre exemple de siège en position escamotée, avec un bébé en place sur le support.

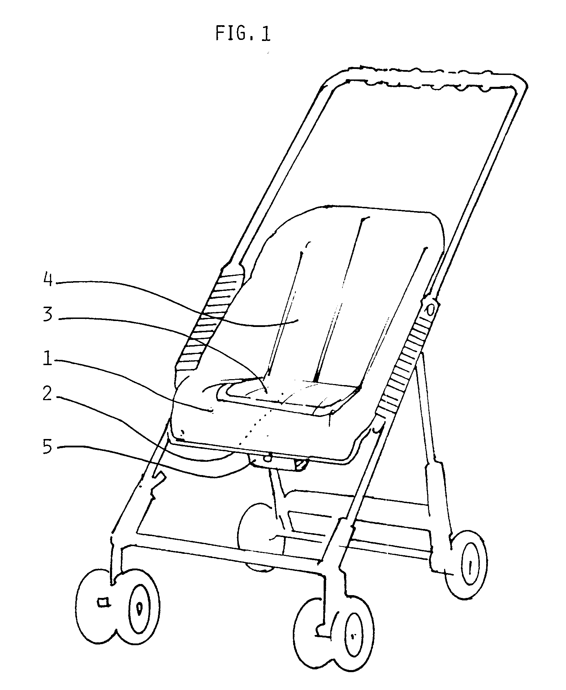

La poussette de type courant, transformable en trotteur pour bébé représentée en perspective sur la **fig.1** comporte:
- un siège 1 dans lequel on a réalisé une ouverture 2 fermée par une partie de siège 3 escamotable par pivotement contre le dossier 4, pour passer un bébé au travers de ladite ouverture et l'asseoir sur un support 5, ses pieds étant en appui sur le sol, d'où il peut se lever pour marcher en se tenant au siège ou à une barre existant sur certaines poussettes.

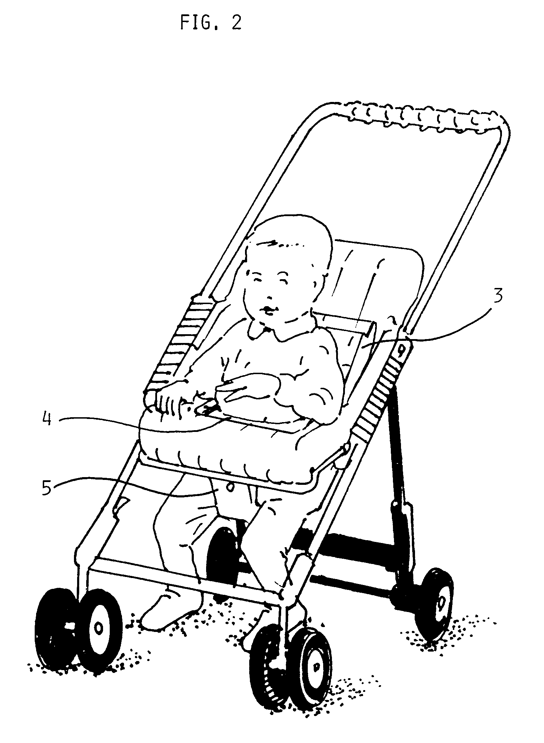

La **fig.2** représente en perspective la poussette de la fig.1 dans laquelle on a placé un bébé en position trotteur, assis sur le support 4, la partie de siège escamotable 3 étant relevée derrière lui.

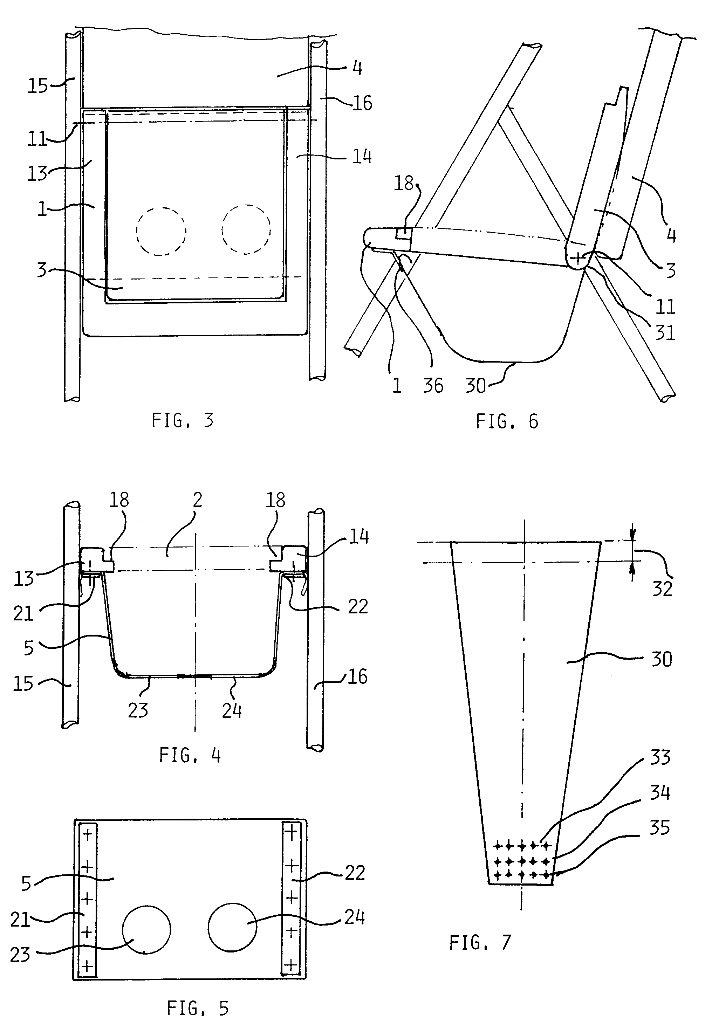

La **fig.3** représente en vue de dessus, la partie de siège escamotable de la poussette de la fig.1. Cette partie escamotable du siège comporte des moyens d'articulation (non représentés), préférablement placé parallèlement et au bord du bas du dossier 4 de ladite poussette; l'articulation de la partie pivotante 3 est schématisée par une ligne d'axe 11, coopérant avec des moyens complémentaires solidaire de la partie fixe 13, 14 du siège 1 disposé entre les tubes 15, 16 de la structure, rendant cette partie escamotable par pivotement contre le dossier de ladite poussette, comme montré plus loin sur la fig.6. La partie escamotable 3 du siège 1 est mise en appui encastré sur au moins une partie d'appui 18 des bords de l'ouverture 2 du siège fixe 1. Cette partie peut être soit latérale comme sur la fig.3, soit à l'extrémité avant de la partie 3 comme montré plus loin sur la fig.6.

Les **fig.4 et 5** montrent un exemple de support 5 de bébé en position trotteur. Le support 5 du bébé est réalisé en matière souple et résistante, et est rendue solidaire des côtés latéraux 13, 14 du dessous la partie fixe du siège 1, par un moyen de réglage en hauteur selon la taille du bébé. Ce moyen peut être par exemple deux barrettes 21, 22 fixées sous le siège ou tout moyen connu compatible, permettant le réglage du support en hauteur.
Le support comporte deux trous 23, 24 de passage des jambes du bébé, de façon à permettre à ses pieds de prendre appui sur le sol en position trotteur.

La **fig.6** montre la position relevée, contre le dossier 4, de la partie 3 du siège escamotable de la fig.3, avec un autre type de support pour trotteur montré sur la **fig.7.** Il est constitué d'une bande de matériau souple 30 fixée d'un côté sur l'arrière 31 de la partie pivotante 3, dans la zone 32, et de l'autre, de façon réglable en longueur, sur un moyen 36 de fixation, solidaire du dessous de l'avant du siège fixe 1. Ce moyen peut être par exemple un profilé métallique comportant des crochets ou des ergots dans lesquels on peut engager une rangée d' oeillets 33, 34 ou 35 selon la taille du bébé, ou tout autre moyen connu de fixation. La forme du support 30 passant entre les jambes du bébé, est donnée à titre d'exemple. Elle peut être différente pourvu qu'elle soutienne convenablement le bébé lorsqu'il est assis.

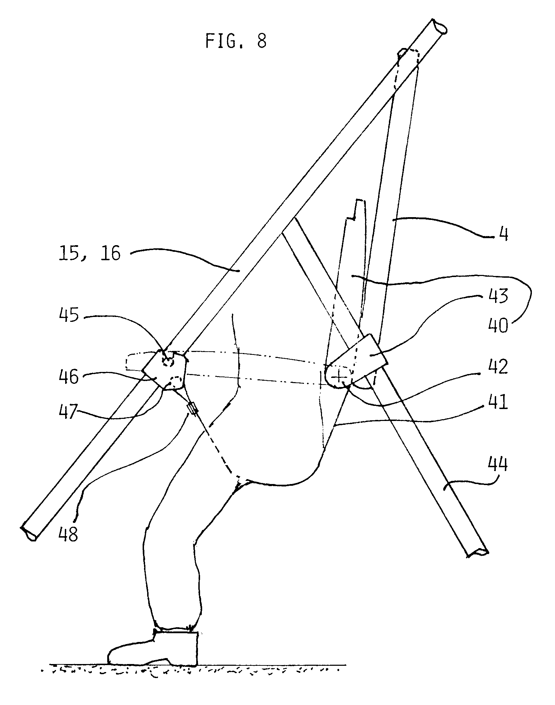

La **fig.8** montre un exemple de siège 40 en position escamotée contre le dossier 4, avec un bébé en place sur le support 41. La totalité du siège 40 est entièrement escamotable par pivotement sur une articulation 42, dont les paliers 43 sont rendus solidaires de la structure 44 de ladite poussette. La partie avant dudit siège 40 comporte deux moyens 45 d'appui latéral sur deux moyens complémentaires 46 solidaires de la structure 15, 16, munis chacun d'un moyen de verrouillage du siège en position de promenade et déverrouillés en position trotteur.
Ces moyens peuvent être encore par exemple une traverse 47 d'appui de l'avant du siège 40 et faisant fonction d'attache du support 41, ou d'ergots 44. Le support 41 du bébé est constitué d'une bande de matériau souple du type de celle de la fig.7, fixée d'un côté sur l'arrière du siège pivotant et de l'autre, par un moyen 48 de réglage en hauteur, engagé sur le tube 47 solidaire de la structure 15, 16.

Le siège escamotable et le support réglable en hauteur de la poussette transformable selon l'invention, sont adaptables sur tous les types de poussettes.

## Revendications

**1 -** Poussette transformable en trotteur pour bébé, dans laquelle on a ménagé un trou de passage du bébé au travers d'une paroi fixe située sous le siège pour lui permettre de s'exercer à marcher, ledit siège étant relevable, un support en forme de croix rigide, suspendu élastiquement, permet au bébé de s'asseoir,
caractérisée en ce qu'elle comporte:
- un siège (40) pivotant dégageant complètement le passage du bébé pour l'asseoir en position trotteur,
- un support souple (5) immobilisé sous le siège, sur lequel le bébé peut s'asseoir, ses pieds étant en appui sur le sol, ou se lever pour marcher en se tenant au siège ou à une barre existant sur certaines poussettes.

**2 -** Poussette transformable selon la revendication 1, caractérisée en ce que le siège (1) comporte une partie escamotable (3) munie de moyens d'articulation (11) coopérant avec des moyens complémentaires solidaires de la partie fixe du siège, pour rendre cette partie escamotable par pivotement contre le dossier (4) de ladite poussette.

**3 -** Poussette transformable selon les revendications 1 et 2, caractérisée en ce que l'articulation (11) de la partie de siège escamotable (3), est préférablement placée parallèlement et au bord du bas du dossier (4) de ladite poussette.

**4 -** Poussette transformable selon les revendications 1, 2 et 3, caractérisée en ce que la partie escamotable (3) du siège (1) est mise en appui encastré sur au moins une partie (18) des bords de l'ouverture (2) de la partie fixe du siège (1).

**5 -** Poussette transformable selon la revendication 1, caractérisée en ce que la totalité du siège (40) est entièrement escamotable par pivotement sur une articulation (42) dont les paliers (43) sont rendus solidaires de la structure (44) de ladite poussette, en ce que la partie avant dudit siège (40) comporte deux moyens (45) d'appui latéral sur deux moyens complémentaires (46), solidaires de la structure (15, 16), munis chacun d'un moyen de verrouillage du siège en position de promenade et déverrouillés en position trotteur.

**6 -** Poussette transformable selon les revendications 1 et 5, caractérisée en ce que le support (5) du bébé est réalisé en matière souple et résistante, et est rendu solidaire des côtés latéraux (13, 14) du dessous la partie fixe du siège (1) par un moyen (21, 22) de réglage en hauteur selon la taille du bébé, en ce que ledit support est muni de trous (23, 24) de passage des jambes du bébé.

**7 -** Poussette transformable selon les revendications 1, 2 et 3, caractérisée en ce que le support (30) du bébé est constitué d'une bande de matériau souple fixée d'un côté sur l'arrière du siège pivotant (31) et de l'autre, de façon réglable en hauteur, sur un moyen 36 de fixation, solidaire du dessous de l'avant du siège fixe (1).

**8 -** Poussette transformable selon les revendications 1 et 5, caractérisée en ce que le support (41) du bébé est constitué d'une bande de matériau souple fixée d'un côté sur l'arrière du siège pivotant (40) et de l'autre, par un moyen (48) de réglage en hauteur, engagé sur un tube (47) solidaire dela structure (15, 16).

**9 -** Poussette transformable selon les revendications précédentes, caractérisée en ce que le siège escamotable et le support réglable en hauteur, sont adaptables sur tous les types de poussettes.
